# DEMANDE DE BREVET EUROPEEN

(11) **EP 0 834 890 A1**
(43) Date de publication de la demande: **08.04.1998**
(21) Numéro de dépôt: 97420172.5
(22) Date de dépôt: 22.09.1997
(51) Int. Cl.: H01F 13/00, B23Q 3/154

(54) **Procédé de démagnétisation pour dispositifs électro-permanents**

(30) Priorité: 01.10.1996 FR 9612158
(71) Demandeur: BRAILLON MAGNETIQUE, 73800 Ste Hélène du Lac (FR)
(72) Inventeur: Buisson, Fernand, 73800 Francin-Montmelian (FR); Doyelle, Pierre, 73800 Montmelian (FR); Sibue, Delphin, 73800 Montmelian (FR)
(74) Mandataire: Bratel, Gérard

(57) **Abrégé**

Le procédé s'applique en particulier à la démagnétisation des plateaux magnétiques à aimants électro-permanents à démagnétisation totale.

Il consiste à envoyer dans des bobinages de faible résistance entourant les aimants, pour la démagnétisation de ces derniers, des impulsions de courant électrique de courte durée, réparties en trains d'impulsions successifs (T1, T2,...,Tn), qui comprennent chacun N impulsions successives de même signe, en faisant alterner des trains d'impulsions positives (T2, T4,...) et des trains d'impulsions négatives (T1, T3,...). Les intensités (I1, I2,...,In) de ces impulsions sont décroissantes dans le temps (t), depuis le premier train d'impulsions (T1) jusqu'au dernier train d'impulsions (Tn).

Un groupe d'alimentation à thysistors permet la mise en oeuvre de ce procédé.

## Description

La présente invention concerne un procédé de démagnétisation pour dispositifs ou appareils électro-permanents, à aimants permanents, dans lesquels l'état neutre est obtenu par la démagnétisation totale des aimants. Cette invention a aussi pour objet un groupe d'alimentation pour dispositifs électro-permanents, mettant en oeuvre ledit procédé de démagnétisation. Ce procédé de démagnétisation et ce groupe d'alimentation sont utilisables en particulier dans le cas de plateaux ou mandrins électro-permanents, servant au maintien de pièces sur diverses machines-outils pendant leur usinage. De tels plateaux magnétiques sont dits "électro-permanents à démagnétisation totale" et sont aussi connus sous l'abréviation "EPDT" :

Les plateaux magnétiques de ce genre comprennent des groupes d'aimants à haute induction mais à faible champ coercitif, du type aluminium-nickel-cobalt, entourés de bobinages électriques et surmontés de pièces ferreuses appelées pôles. L'activation d'un tel plateau magnétique, lui permettant de retenir des pièces métalliques par effet d'attraction magnétique, est réalisée par une opération initiale de magnétisation de ses aimants, par passage de courant électrique dans les bobinages ; ensuite, l'aimantation se maintient d'elle-même pour le temps d'utilisation du plateau magnétique. La désactivation ou neutralisation de ce plateau magnétique, libérant les pièces précédemment retenues, est obtenue par une opération inverse de démagnétisation de ses aimants, également par passage de courant électrique dans leurs bobinages respectifs. La présente invention s'intéresse plus particulièrement à cette opération de démagnétisation.

Dans un premier type connu de plateau magnétique électro-permanent à démagnétisation totale, l'ensemble des aimants est recouvert par une plaque polaire, et chaque aimant est entouré d'un bobinage en fil de cuivre enrobé d'un émail isolant, de faible diamètre, comportant un nombre de spires élevé. La magnétisation d'un tel plateau magnétique s'obtient par un courant électrique établi dont la durée de passage est d'environ 0,8 à 1,0 seconde, et la démagnétisation s'obtient par des passages de courants établis inverses et dégressifs, dont le nombre, de l'ordre de la dizaine, porte le temps total du cycle de démagnétisation à environ 10 secondes.

Un tel dispositif est cher, car outre la plaque polaire dont le coût représente 30% du coût du plateau magnétique, le temps de réalisation des bobinages est important. De plus, l'étanchéité des bobinages est assurée par un joint pincé par la plaque polaire.

Dans un autre type connu de plateau magnétique électro-permanent à démagnétisation totale, il n'est pas prévu de plaque polaire au-dessus des aimants, et chaque aimant est entouré d'un bobinage formé de quelques spires (six à dix spires) de câble en cuivre gainé de PVC, possèdant une section de 1,5 à 6 mm². La magnétisation et la démagnétisation s'obtiennent par des décharges de condensateurs, ayant chacune une durée de 3 à 5 millisecondes, et dont l'intensité est limitée à environ 500 ampères, cette valeur correspondant à la limite admissible par les condensateurs.

Ce genre de plateau magnétique est, en lui-même, d'un coût très modeste car l'étanchéité des bobinages est assurée entièrement par la gaine en PVC entourant les spires du câble, la plaque polaire devenant ainsi inutile dans sa fonction "étanchéité". Par contre, le groupe d'alimentation associé à un tel appareil est cher, en raison du coût des condensateurs. De plus, les temps de charge puis de décharge des condensateurs impliquent, pour le cycle complet de démagnétisation, une durée totale de 20 à 30 secondes. Cette durée, considérée comme acceptable dans le passé, est actuellement devenue inacceptable.

Une réalisation récente de plateau magnétique électro-permanent à démagnétisation totale combine les deux types précédents, en prévoyant des bobinages en fil avec isolation en émail, alors qu'aucune plaque polaire n'est présente, l'étanchéité étant réalisée par encapsulage et enrobage de résine époxy. Ce plateau magnétique est alimenté par un groupe dépourvu de condensateurs, avec un temps très court pour la démagnétisation.

Plus particulièrement, le groupe d'alimentation comprend, dans le cas de cette réalisation, des thyristors qui à partir du courant alternatif du réseau permettent d'envoyer, vers les bobinages entourant les aimants, trois alternances successives de même signe pour la magnétisation, tandis que pour la démagnétisation on commande une ouverture dégressive des deux thyristors, sur toutes les alternances (positives ou négatives) du réseau, pendant une dizaine de périodes complètes successives.

Le groupe d'alimentation possède ainsi une grande simplicité. Toutefois, la réalisation du plateau magnétique reste ici onéreuse, car elle nécessite : des bobinages en fil avec isolation en émail comportant de nombreuses spires, un encapsulage en matière plastique, un sablage des pièces métalliques pour l'accrochage de la résine, et une mise en oeuvre particulière de cette résine, par exemple par coulée sous vide. Par ailleurs, du fait même de sa simplicité, le groupe d'alimentation est limité dans ses possibilités d'adaptation aux plateaux magnétiques de surfaces importantes ; il est donc nécessaire, dans ce cas d'application, de multiplier les modules d'alimentation.

La présente invention vise à éliminer l'ensemble des inconvénients précédemment exposés, en fournissant un procédé de démagnétisation pour dispositifs ou appareils électro-permanents, à démagnétisation totale, permettant de conserver la structure simple et économique des systèmes à décharges de condensateurs, y compris les bobinages formés seulement de quelques spires de câble isolé par du PVC, en leur associant un groupe d'alimentation sans condensateurs qui assure une démagnétisation optimale, l'absence de condensateurs possédant le double avantage de réduire le coût du groupe d'alimentation et de diminuer la durée totale du cycle de démagnétisation, tout en créant sur le réseau des appels de courant certes relativement importants, mais de très courte durée et espacés dans le temps ce qui les rend acceptables au regard des normes actuelles.

A cet effet, l'invention a essentiellement pour objet un procédé de démagnétisation pour dispositifs ou appareils à aimants électro-permanents, à démagnétisation totale, et en particulier pour mandrins ou plateaux magnétiques électro-permanents, le procédé consistant à envoyer dans des bobinages de faible résistance électrique entourant les aimants, pour la désaimantation de ces derniers, des impulsions de courant électrique réparties en trains successifs d'impulsions qui comprennent chacun un nombre entier N d'impulsions très courtes et de même signe, ceci en faisant alterner des trains d'impulsion positives et des trains d'impulsions négatives, les intensités des impulsions étant décroissantes dans le temps, depuis le premier train d'impulsions jusqu'au dernier train d'implusions.

De préférence, chaque train d'impulsions comprend un nombre entier N d'impulsions successives, de même signe, qui est compris entre deux et huit.

Avantageusement, les impulsions de courant précitées résultent directement des alternances du réseau, les trains d'impulsions positives provenant d'alternances positives successives du réseau, et les trains d'impulsion négatives provenant d'alternances négatives successives du réseau, les temps de prélèvement de le tension alternative du réseau étant dégressifs d'un train d'impulsions au suivant.

Comme on le conçoit aisément, les impulsions peuvent ici provenir d'alternances consécutives ou non du réseau, et la loi de décroissance de l'intensité de ces impulsions peut être linéaire, parabolique ou autre, ce qui, combiné avec le choix du nombre d'impulsions de chaque train, offre évidemment une très grande souplesse, permettant l'obtention d'excellents résultats quant à la démagnétisation, quel que soit l'état de charge initial du plateau magnétique.

Le procédé de démagnétisation, objet de la présente invention, est utilisable en association avec un procédé de magnétisation du même dispositif ou appareil électro-permanent à démagnétisation totale, consistant à envoyer dans les bobinages entourant les aimants, pour la magnétisation de ces derniers, un train d'impulsions de courant électrique, toutes de même signe.

Ces procédés de magnétisation et de démagnétisation sont notamment utilisables avec un plateau magnétique électro-permanent à démagnétisation totale sans plaque polaire, dont les aimants sont entourés par des bobinages de faible résistance électrique qui sont réalisés chacun, de préférence, par quelques spires de câble conducteur étanche, donc un plateau magnétique de structure simple et économique. En considérant l'ensemble que constitue un tel plateau magnétique et son procédé de démagnétisation, l'invention a pour avantage fondamental de faire passer des impulsions d'intensité importante, au travers d'une faible résistance électrique, sans pour autant provoquer des appels de courant efficace excessifs sur le réseau. L'expression "courant efficace" est employée ici dans le sens physique que lui donnent les électriciens, c'est-à-dire qu'elle désigne le courant continu produisant le même dégagement de chaleur. Le courant efficace n'est donc pas très élevé, mais par contre les trains d'impulsions (auxquels correspond ce courant efficace faible) sont très actifs sur l'état magnétique des aimants du plateau électro-permanent concerné.

Selon un autre aspect de la présente invention, celle-ci a aussi pour objet un groupe d'alimentation pour un dispositif ou appareil électro-permanent, en particulier pour un plateau magnétique électro-permanent à démagnétisation totale, destiné à la mise en oeuvre du procédé de démagnétisation, et le cas échéant de magnétisation, précédemment défini, ce groupe d'alimentation, prévu pour être raccordé à un réseau de distribution de courant alternatif, comprenant au moins deux thyristors montés en sens inverse l'un de l'autre et reliés à des moyens de commande, ces derniers étant prévus pour envoyer vers les bobinages entourant les aimants, lors d'un processus de démagnétisation, des impulsions de courant électrique réparties en trains d'impulsions successifs qui comprennent chacun un nombre entier N d'impulsions successives très courtes et de même signe, ceci en faisant alterner des trains d'impulsions positives et des trains d'impulsions négatives, les intensités des impulsions étant décroissantes dans le temps, depuis le premier train d'impulsions jusqu'au dernier train d'impulsions.

De toute façon, l'invention sera mieux comprise à l'aide de la description qui suit, en référence au dessin schématique annexé illustrant, à titre d'exemple, un mode de mise en oeuvre de ce procédé de démagnétisation pour dispositifs électro-permanents, et représentant un groupe d'alimentation pour un tel dispositif, permettant la mise en oeuvre dudit procédé :
Figure 1 est un schéma électrique d'un groupe d'alimentation pour un plateau magnétique électro-permanent, ce dernier étant représenté en coupe ;
Figure 2 est un diagramme très schématique des impulsions de courant envoyées aux bobinages d'un tel plateau magnétique, pour sa démagétisation ;
Figure 3 indique la courbe de la tension électrique appliquée aux bobinages du plateau magnétique, lors de la magnétisation et en début de démagnétisation ;
Figure 4 montre la même courbe de tension, mais en fin de démagnétisation ;
Figure 5 représente la courbe de l'intensité électrique absorbée par les bobinages, lors de la magnétisation et en début de démagnétisation ;
Figure 6 représente la même courbe d'intensité, mais en fin de démagnétisation ;
Figure 7 illustre graphiquement l'évolution du courant et de la tension, pour une seule impulsion, lorsque l'angle d'ouverture du thyristor contrôlant cette impulsion est grand ;
Figure 8 est une similaire à figure 7, mais correspondant à une faible valeur de l'angle d'ouverture du thyristor.

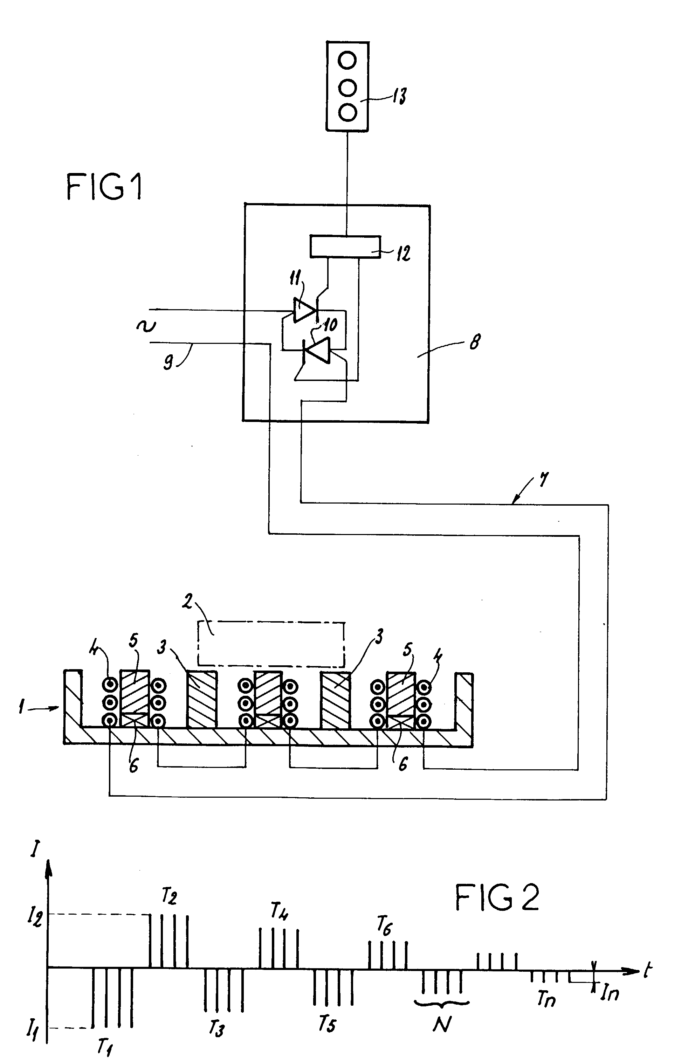

Sur la figure 1 est représenté schématiquement un plateau magnétique 1 de type électro-permanent à démagnétisation totale, permettant l'attraction d'une pièce métallique 2 par exemple pour son immobilisation lors d'un usinage. Le plateau magnétique 1 comprend ici une pluralité d'aimants 6, entourés chacun d'un bobinage 4 de faible résistance, et surmontés de pôles prolongateurs ferreux 5. Des pièces ferreuses 3 conduisent vers la surface active du plateau 1 les polarités inverses de celles des pôles 5, et cette surface est donc constituée par une succession de polarités alternativement Nord, Sud, Nord, Sud, etc... Ce plateau magnétique 1 est dépourvu de plaque polaire, la pièce 2 se trouvant ainsi directement attirée contre les pôles 5 et les pièces polaires 3. Tous les bobinages 4 du plateau magnétique 1 sont raccordés électriquement, par des conducteurs 7, à un groupe d'alimentation 8 qui permet la magnétisation et la démagnétisation des aimants 6. Le groupe d'alimentation 8 est lui-même raccordé, pour son utilisation, à un réseau de distribution de courant alternatif 9.

A l'intérieur du groupe d'alimentation 8 sont placés deux thyristors 10 et 11 montés en sens opposés l'un de l'autre, qui permettent de contrôler le passage du courant électrique prélevé du réseau 9, respectivement dans le sens des alternances positives et dans le sens des alternances négatives. Les gâchettes de commande des deux thysistors 10 et 11 sont raccordées à un circuit électronique de commande interne 12, lui-même raccordé à un organe de commande manuelle extérieur 13 ; ce dernier permet à un opérateur de placer sélectivement le plateau magnétique soit en position "marche", en provoquant la magnétisation des aimants 6, soit en position "arrêt", en provoquant inversement la démagnétisation de ces aimants 6.

Plus particulièrement, l'invention s'intéresse à l'opération de démagnétisation, dont le déroulement est illustré de façon générale par le diagramme de la figure 2, sur lequel le temps t est porté en abscisses. Chaque trait vertical représente ici une impulsion ou "pic" de courant, envoyée à un instant donné dans les bobinages 4. En ordonnées sont portées les intensités électriques I, de sorte que la longueur de chaque trait correspond à l'intensité (positive ou négative) de l'impulsion corrrespondante.

Plus précisément, la démagnétisation du plateau magnétique 1 est réalisée en envoyant, dans les bobinages 4 entourant les aimants 6, une succession de trains d'impulsions en nombre prédéfini, soit un premier train d'impulsions T1, un deuxième train d'impulsions T2,..., un dernier train d'impulsions Tn, le nombre total des trains d'impulsions pouvant être de l'ordre d'une dizaine à une vingtaine. Chaque train d'impulsions T1, T2 ..., Tn comprend lui-même N impulsions de courant successives, le nombre entier N étant par exemple égal à trois ou quatre, toutes les impulsions d'un train d'impulsions étant de même signe. Par contre, ce signe alterne d'un train d'impulsions au suivant : ainsi les N impulsions du premier train T1 sont toutes de signe négatif, les N impulsions du deuxième train T2 sont toutes de signe positif, les N impulsions du troisième train T3 sont toutes de signe négatif, les N impulsions du quatrième train T4 sont toutes de signe positif, et ainsi de suite... De plus, les intensités Il, I2, ...,In (en valeur absolue) des impulsions de courant sont décroissantes dans le temps t, depuis le premier train d'impulsions T1 jusqu'au dernier train d'impulsions Tn, selon une loi de décroissance mathématiquement définie, par exemple une loi linéaire ou une loi parabolique.

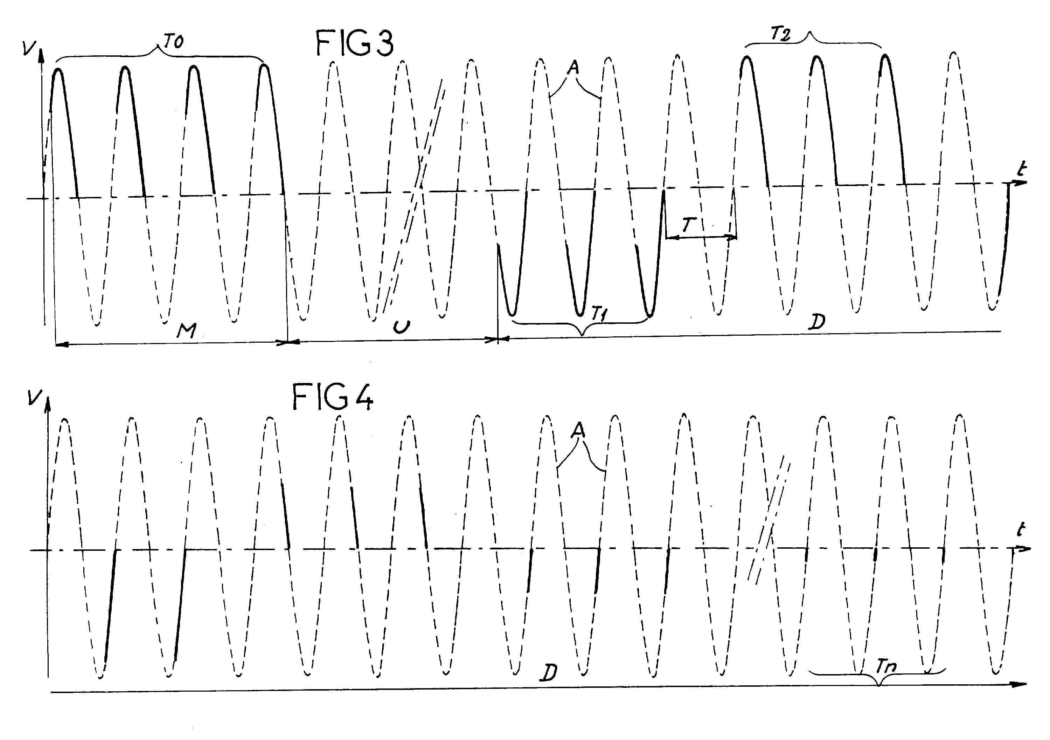

Grâce aux thyristors 10 et 11 du groupe d'alimentation 8, les trains d'impulsions positives T2, T4, T6,... sont extraits des alternances positives du réseau, et les trains d'impulsions négatives T1, T2, T5, ... sont extraits des alternances négatives du réseau, comme l'illustrent les figures 3 et suivantes.

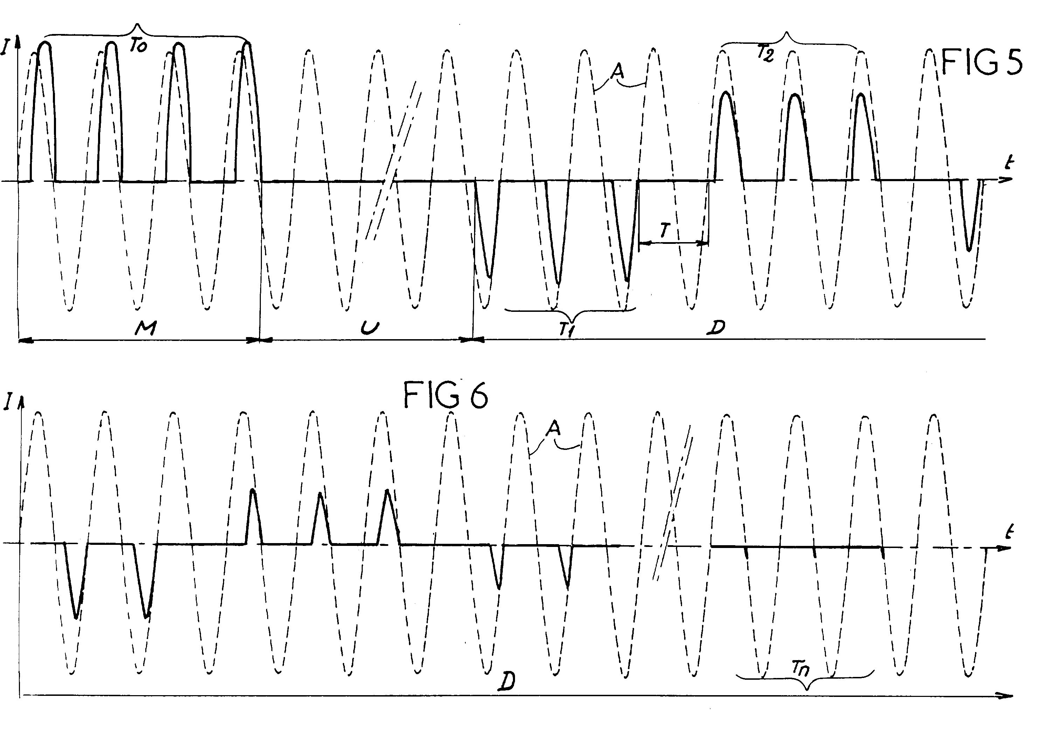

Ainsi, la figure 3 montre en détail les valeurs de tension V des premiers trains d'impulsions T1, T2 lors de la démagnétisation D, tandis que la figure 4 montre les valeurs de tension V des derniers trains d'impulsions, jusqu'à la fin de la démagnétisation D. Parallèlement, la figure 5 montre en détail les valeurs d'intensité I des premiers trains d'impulsions T1, T2 lors de la démagnétisation D, tandis que la figure 6, montre les valeurs d'intensité I des derniers trains d'impulsions, jusqu'à la fin de la démagnétisation D. Sur ces figures, la courbe A représente, selon le cas, la tension ou l'intensité sinusoïdale du réseau.

Comme l'illustrent les figures, dans l'exemple considéré les trois impulsions de chaque train d'impulsions T1, T2 ..., Tn se succèdent à la fréquence du réseau, en correspondance avec trois alternances successives de même signe du réseau. Un intervalle de temps égal à une période complète T du réseau est prévu, entre deux trains d'impulsions successifs. Ainsi, dans le cas d'un réseau avec fréquence habituelle de 50 hertz, les impulsions possèdent chacune une durée maximale de 10 millisecondes, et deux impulsions successives sont séparées par un intervalle de temps d'au moins 20 millisecondes. Les intensités des premières impulsions peuvent atteindre une valeur de l'ordre de 300 ampères, sans inconvénients.

Accessoirement, les figures 3 à 6 montrent que la magnétisation M du plateau magnétique 1 peut être obtenue, à l'aide du même groupe d'alimentation 8, en envoyant dans les bobinages 4 entourant les aimants 6 un train unique T0 d'impulsions de courant toutes de même signe, par exemple quatre impulsions de signe positif, délivrées en correspondance avec quatre alternances positives consécutives du réseau. Un temps indéterminé d'utilisation U du plateau magnétique s'écoule entre la fin de la magnétisation M et le début de la démagnétisation D.

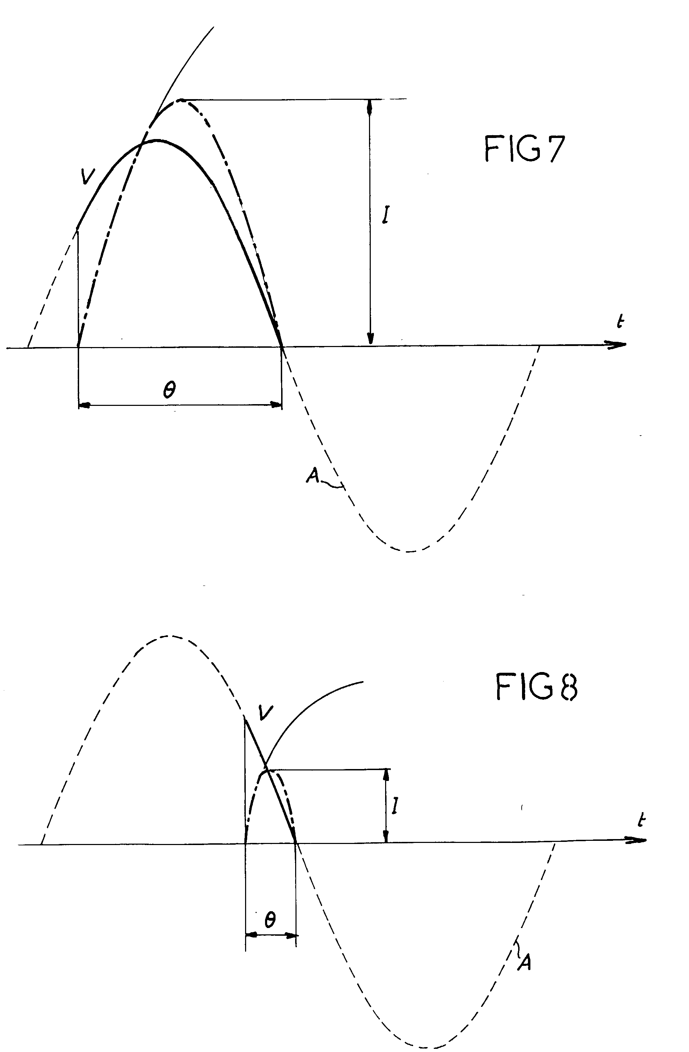

Les durées, tensions et intensités des impulsions, tant en magnétisation M qu'en démagnétisation D, sont commandées au moyen des thyristors 10 et 11 et du circuit électronique 12 du groupe d'alimentation 8, selon le principe illustré aux figures 7 et 8. Plus particulièrement, la figure 7 montre pour une seule impulsion l'évolution de la tension V et de l'intensité I, lorsque l'angle d'ouverture θ d'un thyristor 10 ou 11 est grand, ce qui correspond aux premiers trains d'impulsions du processus de démagnétisation. La figure 8 montre de façon analogue l'évolution de la tension V et de l'intensité I, lorsque l'angle d'ouverture θ du thyristor est petit, donc en fin de processus de démagnétisation. Bien entendu, toutes valeurs intermédiaires sont possibles.

Comme il va de soi, l'invention ne se limite pas au seul mode de mise en oeuvre de ce procédé de démagnétisation qui a été décrit ci-dessus et illustré au dessin, à titre d'exemple ; elle en embrasse, au contraire, toutes les variantes de mise en oeuvre et d'application, respectant le même principe. En particulier, l'on ne s'éloignerait pas du cadre de l'invention :
- en modifiant le nombre des impulsions de chaque train d'impulsions ;
- en faisant se succéder ces impulsions à une fréquence qui, au lieu d'être égale à la fréquence du réseau, serait égale à un sous-multiple de la fréquence du réseau ;
- en prévoyant, entre deux trains d'impulsions consécutifs, un intervalle de temps égal non pas à une seule période du réseau, mais à un multiple de cette période ;
   - en prévoyant, pour l'ensemble du processus de de démagnétisation, un nombre total quelconque de trains d'impulsions, et une loi de décroissance quelconque des intensités des impulsions ;
   - en appliquant le même procédé non seulement à la démagnétisation de plateaux magnétiques électro-permanents, mais encore à la démagnétisation de tous autres dispositifs ou appareils électro-permanents, quel soit le nombre de leurs aimants et quelles que soient les particularités constructives de ces aimants et de leurs bobinages.

## Revendications

1. Procédé de démagnétisation pour dispositifs ou appareils électro-permanents à démagnétisation totale, et en particulier pour mandrins ou plateaux magnétiques électro-permanents (1), caractérisé en ce qu'il consiste à envoyer dans des bobinages (4) de faible résistance électrique entourant les aimants (6), pour la démagnétisation (D) de ces derniers, des impulsions de courant électriques réparties en trains d'impulsions successifs (T1, T2, ..., Tn) qui comprennent chacun un nombre entier (N) d'impulsions successives très courtes et de même signe, ceci en faisant alterner des trains d'impulsions positives (T2, T4,...) et des trains d'impulsions négatives (T1, T3,...), les intensités (Il, I2 ..., In) des impulsions étant décroissantes dans le temps (t), depuis le premier train d'impulsions (T1) jusqu'au dernier train d'impulsions (Tn).

2. Procédé de démagnétisation selon la revendication 1, caractérisé en ce que chaque train d'impulsion ( T1, T2, ...,Tn) comprend un nombre entier (N) d'impulsions successives, de même signe, compris entre deux et huit.

3. Procédé de démagnétisation selon la revendication 1 ou 2, caractérisé en ce que les impulsions de courant précitées résultent directement des alternances du réseau (9), les trains d'impulsions positives (T2, T4,..) provenant d'alternances positives successives du réseau, et les trains d'impulsions négatives (T1, T3,...) provenant d'alternances négatives successives du réseau, les temps de prélèvement de la tension alternative (V) du réseau (9) étant dégressifs d'un train d'impulsions au suivant.

4. Procédé de démagnétisation selon la revendication 3, caractérisé en ce que les impulsions de chaque train d'impulsions (T1, T2,.. .,Tn) se succèdent à la fréquence du réseau (9).

5. Procédé de démagnétisation selon la revendication 3, caractérisé en ce que les impulsions de chaque train d'impulsions se succèdent à une fréquence égale à un sous-multiple de la fréquence du réseau (9).

6. Procédé de démagnétisation selon l'une quelconque des revendications 3 à 5, caractérisé que l'intervalle de temps entre deux trains d'impulsions (T1, T2,..,Tn) consécutifs est égal à une période (T) du réseau (9), ou à un multiple de cette période (T).

7. Procédé de démagnétisation selon l'une quelconque des revendications 1 à 6, caractérisé en ce que la décroissance des intensités (I1, I2,...,In) des impulsions, depuis le premier train d'impulsion (T1) jusqu'au dernier train d'impulsions (Tn), suit une loi linéaire ou une loi parabolique.

8. Procédé de démagnétisation selon l'une quelconque des revendications 1 à 7, caractérisé en ce qu'il est utilisé en association avec un procédé de magnétisation du même dispositif ou appareil électro-permanent (1), consistant à envoyer dans les bobinages (4) entourant les aimants (6), pour la magnétisation (M) de ces derniers, un train d'impulsions de courant électrique (T0), toutes de même signe.

9. Procédé de démagnétisation selon l'une quelconque des revendications 1 à 8, caractérisé en ce qu'il est utilisé avec un plateau magnétique (1) électro-permanent à démagnétisation totale sans plaque polaire, dont les aimants (6) sont entourés par des bobinages (4) de faible résistance électrique qui sont réalisés chacun, de préférence, par quelques spires de câble conducteur étanche.

10. Groupe d'alimentation pour un dispositif ou appareil électro-permanent, en particulier pour un plateau magnétique électro-permanent (1), à démagnétisation totale, destiné à la mise en oeuvre du procédé de démagnétisation et le cas échéant de magnétisation selon l'une quelconque des revendications 1 à 9, caractérisé en ce que ce groupe d'alimentation (8), prévu pour être raccordé à un réseau (9) de distribution de courant alternatif, comprend au moins deux thyristors (10,11) montés en sens inverse l'un de l'autre et reliés à des moyens de commande (12,13), ces derniers étant prévus pour envoyer vers les bobinages (4) entourant les aimants (6), lors d'un processus de démagnétisation (D), des impulsions de courant électrique réparties en trains d'impulsions successifs (T1, T2,.. .,Tn) qui comprennent chacun un nombre entier (N) d'impulsions successives très courtes et de même signe, ceci en faisant alterner des trains d'impulsions positives (T2, T4,..)et des trains d'impulsions négatives (T1, T3,...), les intensités (I1, I2,..., In) des impulsions étant décroissantes dans le temps, depuis le premier train d'impulsions (T1) jusqu'au dernier train d'impulsions (Tn).
